# EUROPEAN PATENT SPECIFICATION

(11) **EP 1 430 247 B1**
(45) Date of publication and mention of the grant of the patent: **11.01.2006**
(21) Application number: 02799529.9
(22) Date of filing: 05.09.2002
(51) Int. Cl.: F16L 21/02

(54) **Method of making a sealing ring and strand for such a sealing ring**
Verfahren zum Herstellen eines Dichtungsrings und Strang für einen solchen Dichtungsring
Procédé de fabrication d'une bague d'étanchéité et profilé extrudé pour cette bague

(30) Priority: 27.09.2001 SE 0103203
(43) Date of publication of application: 23.06.2004
(73) Proprietor: Trelleborg Forsheda Building AB, 331 29 Värnamo (SE)
(72) Inventor: CAVKA, Elvir, S-331 41 Värnamo (SE); GUSTAFSSON, Leif, S-331 95 Kärda (SE)
(74) Representative: Andersson, Per-Olof
(86) International application number: PCT/SE2002/001579
(87) International publication number: WO 2003/027558

(56) References cited:
- WO-A1-01/38770
- DE-A1- 3 522 790
- SE-C2- 505 267

## Description

### Field of the Invention

The present invention relates to a method of making a sealing ring for sealing an annular gap between a circular cylindrical outer surface of an inner pipe and a circular cylindrical inner surface of an outer pipe, which is axially slidable onto the inner pipe, said sealing ring being adapted to be located in a circumferential groove in one of the pipes, prior to the sliding-on of the outer pipe, and having a first sealing portion, which is adapted to abut against the bottom of the groove formed in said one of the pipes, and a second sealing portion, which is adapted to abut against the other pipe, the method comprising the steps of extruding a strand, bending a length of said strand into circular annular shape, bringing the ends of said length together, and interconnecting them. The invention further relates to a strand for making a sealing ring according to claim 5.

### Background Art

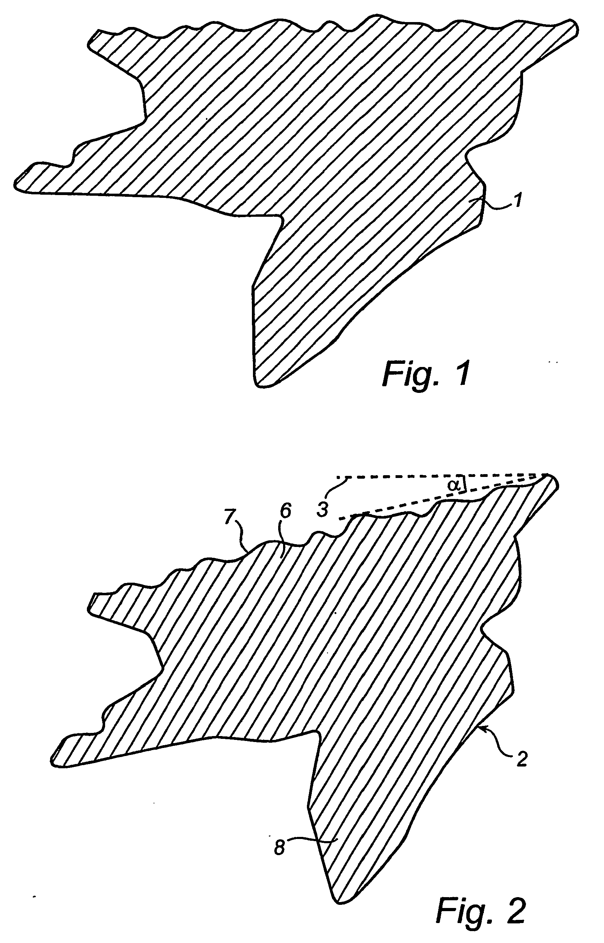

A prior-art sealing ring of this kind will be described below with reference to Figs 1-3.

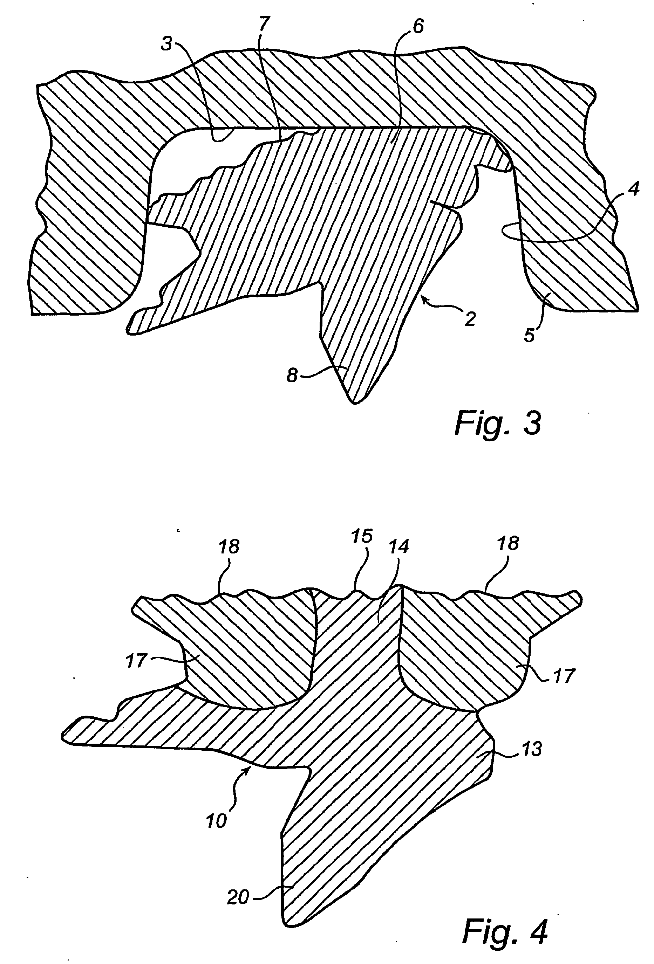

Fig. 1 shows in cross section a strand 1 made by means of co-extrusion of a soft rubber material having good sealing properties. Fig. 2 shows in cross section a prior-art sealing ring 2 made from a length of the strand 1. The sealing ring 2 is obtained by bending the length of the strand 1 into a circular annular shape, the ends thereof being brought together and interconnected. The sealing ring 2 has a first sealing portion 6, which is adapted to abut against the bottom 3 of an internal, circumferential groove 4 of an outer pipe 5 (Fig. 3) and which has a waved sealing surface 7. The sealing ring 2 also has a second sealing portion 8, which is adapted to abut against the inner pipe (not shown). The sealing ring 2 has essentially the same width as the groove 4.

One problem associated with the prior-art sealing ring 2 is that the difference between the outer diameter and the inner diameter of the ring causes stress in the ring such that it is distorted, as shown in Fig. 2, after the length of strand has been bent and its ends interconnected. This distortion is shown in Fig. 2 as the angle α between the groove bottom 3 and the sealing surface 7. When the sealing ring 2 is thus deformed mounting it correctly in the groove 4 will be more difficult and there will be a risk of the sealing effect being considerably reduced due to the fact that the sealing ring is not correctly inserted in the groove 4. Other designs of sealing rings are shown in documents EP-A-0 560 104 and DE-A-35 22 790, for example.

### Summary of the Invention

The object of the present invention is therefore to provide a method of making a sealing ring and a strand for a sealing ring which is not distorted in the manner described above, but which retains its shape once it has been finished and thus is easy to mount, i e insert in a groove provided for this purpose in a pipe, and provides a good sealing effect.

This object is achieved by a method of making a sealing ring according to claim 1 and by a strand according to claim 5.

In a preferred embodiment the supporting portions, like said first sealing portion, are adapted to abut against the bottom of the groove.

The total axial extension of the supporting portions and said first sealing portion is essentially equal to the width of the groove.

Each of the supporting portions has in cross section a radial extension that is at least 1/4 of the radial extension of the sealing ring in cross section.

The soft rubber material and the hard rubber material advantageously have a hardness of respectively 35-65 IRHD and 75-95 IRHD.

### Brief Description of the Drawings

The invention will now be described in more detail with reference to the accompanying drawings.
Fig. 1 is a sectional view of a rubber strand intended for the manufacture of the prior-art sealing ring described above.
Fig. 2 is a sectional view of the prior-art sealing ring described above.
Fig. 3 is a sectional view of the prior-art sealing ring described above as inserted in an internal, circumferential groove of a pipe.
Fig. 4 is a sectional view of a sealing ring according to the invention.
Fig. 5 is a sectional view of the sealing ring shown in Fig. 4 as inserted in an internal, circumferential groove of a pipe.
Fig. 6 is a sectional view of the sealing ring shown in Fig. 4 during sealing of an annular gap between two pipes.

### Description of a Preferred Embodiment

With reference to Fig. 4, a sealing ring 10 according to the present invention is shown in radial cross section. The sealing ring 10 is made from a length of a strand made by means of extrusion in the same manner as the prior-art sealing ring 2 described above. The strand from which the sealing ring 10 is made has the same cross-sectional profile as the sealing ring shown in Fig. 4, which means that it has not been deformed after having been finished, i e after the length of strand has been bent and its ends interconnected. This allows the sealing ring 10 to be mounted relatively easily in an internal, circumferential groove 11 in an outer pipe 12 (see Fig. 5).

The strand from which the sealing ring 10 is made is, in its turn, made in one piece by means of co-extrusion of a soft rubber material suitable for sealing with a hardness of 35-65 IRHD and a hard rubber material with a hardness of 75-95 IRHD.

The soft rubber material forms a sealing body 13 having a sealing portion 14, which is oriented radially outwards and which has a waved sealing surface 15, said sealing surface 15 being adapted to be pressed in a sealing manner against the bottom 16 of the groove 11 formed in the pipe 12.

The hard rubber material forms two supporting portions 17, which are located on both sides of the sealing portion 14 and which each in cross section have an axial extension that, in the embodiment shown, is essentially equal to their radial extension. To prevent a deformation of the kind described above the supporting portions 17 generally each have an axial extension that is greater than or equal to the radial extension. As shown in Fig. 5, the axial extension or width of the supporting portions 17 and the sealing portion 14 is essentially equal to the width of the groove 11. Each of the supporting portions 17 has in cross section a radial extension that is approximately 1/3 of the total radial extension of the sealing ring 10 in cross section. In general, the radial extension of the supporting portions 17 is at least 1/4 of the radial extension of the sealing ring 10.

When the sealing ring 10 is mounted in the groove 11 of the pipe 12 (Fig. 5), the sealing surface 15 of the sealing portion 14 and the corresponding, similarly waved outer surface 18 of the supporting portions 17 abut against the whole width of the bottom 16 of the groove 11. The sealing ring 10 is thus kept firmly in place in the groove 11 abutting sealingly against the bottom 16 of the groove.

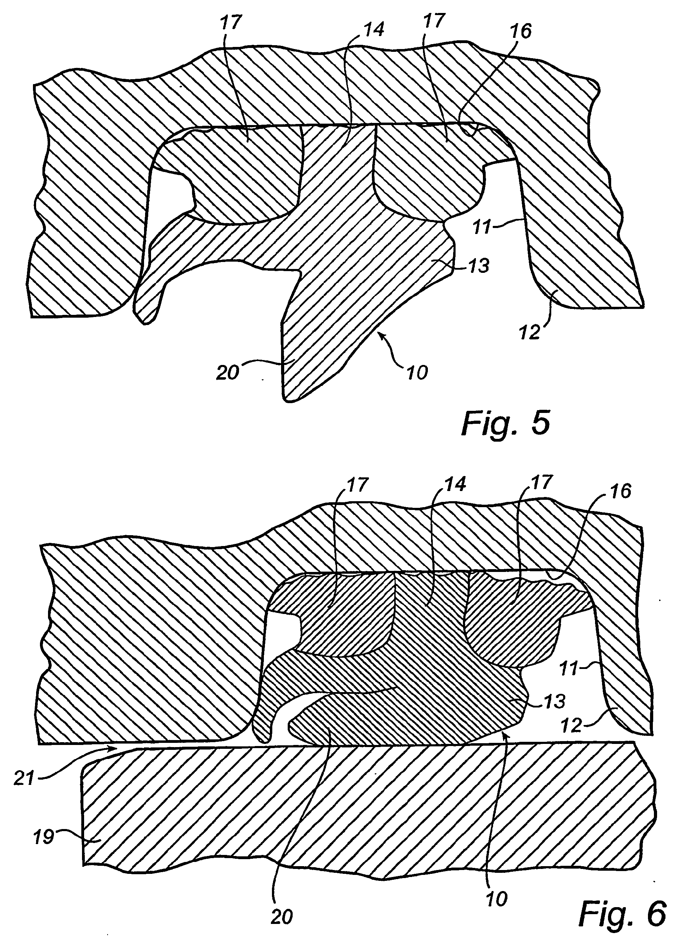

When the outer pipe 12 with the sealing ring 10 positioned in the groove 11 is slid onto an inner pipe 19 (Fig. 6), a sealing portion 20 formed on the sealing body 13 and oriented radially inwards will abut sealingly against the outer surface of the inner pipe 19. The sealing ring 10 thus seals an annular gap 21 between the two pipes 12 and 19.

Various modifications of the sealing ring 10 described above are possible, as defined by the appended claims. For example, if the sealing ring is intended to be arranged in an outer, annular groove of an inner pipe, it will have a radially inner sealing portion enclosed by two supporting portions made of a hard rubber material.

## Claims

1. A method of making a sealing ring (10) for sealing an annular gap (21) between a circular cylindrical outer surface of an inner pipe (19) and a circular cylindrical inner surface of an outer pipe (12), which is axially slidable onto the inner pipe, said sealing ring (10) being adapted to be located in a circumferential groove (11) in one (12) of the pipes, prior to the sliding-on of the outer pipe (12), and having a first sealing portion (14), which is adapted to abut against the bottom (16) of the groove (11) formed in said one (12) of the pipes, and a second sealing portion (20), which is adapted to abut against the other pipe (19), the method comprising the steps of extruding a strand, bending a length of said strand into circular annular shape, bringing the ends of said length together, and interconnecting them, **characterised in that** the step of extruding a strand comprises making a strand in one piece by means of co-extrusion of a soft rubber material and a hard rubber material, the soft rubber material forming a sealing body (13), which comprises said sealing portions (14, 20) of the sealing ring (10) to be made, and the hard rubber material forming two supporting portions (17), which are located on both sides of said first sealing portion (14) and which each in cross section have an axial extension that is greater than or equal to their radial extension, the axial and radial extensions referring to the sealing ring (10) to be made.

2. A method according to claim 1, wherein the total axial extension of the supporting portions (17) and said first sealing portion (14) is essentially equal to the width of the groove (11).

3. A method according to any one of the preceding claims, wherein each of the supporting portions (17) in cross section has a radial extension that is at least 1/4 of the radial extension of the strand in cross section.

4. A method according to any one of the preceding claims, wherein the soft rubber material has a hardness of 35-65 IRHD and the hard rubber material has a hardness of 75-95 IRHD.

5. A strand, a length of which is used for making a sealing ring (10) for sealing an annular gap (21) between a circular cylindrical outer surface of an inner pipe (19) and a circular cylindrical inner surface of an outer pipe (12), which is axially slidable onto the inner pipe, said sealing ring (10) being adapted to be located in a circumferential groove (11) in one (12) of the pipes, prior to the sliding-on of the outer pipe (12), and having a first sealing portion (14), which is adapted to abut against the bottom (16) of the groove (11) formed in said one (12) of the pipes, and a second sealing portion (20), which is adapted to abut against the other pipe (19), **characterised in that** the strand is made in one piece by means of co-extrusion of a soft rubber material and a hard rubber material, the soft rubber material forming a sealing body (13), which comprises said sealing portions (14, 20) of the sealing ring (10) to be made, and the hard rubber material forming two supporting portions (17), which are located on both sides of said first sealing portion (14) and which each in cross section have an axial extension that is greater than or equal to their radial extension, the axial and radial extensions referring to the sealing ring (10) to be made.

6. A strand according to claim 5, wherein the supporting portions (17), like said first sealing portion (14), are adapted to abut against the bottom (16) of the groove (11).

7. A strand according to claim 5 or 6, wherein each of the supporting portions (17) in cross section has a radial extension that is at least 1/4 of the radial extension of the strand in cross section.

8. A strand according to any one of claim 5-7, wherein the soft rubber material has a hardness of 35-65 IRHD and the hard rubber material has a hardness of 75-95 IRHD.

## Patentansprüche

1. Verfahren zur Herstellung eines Dichtungsrings (10) zum Abdichten eines ringförmigen Spalts (21) zwischen einer kreisförmigen zylindrischen Außenfläche eines inneren Rohrs (19) und einer kreisförmigen zylindrischen Innenfläche eines äußeren Rohrs (12), das axial auf das innere Rohr geschoben werden kann, wobei der Dichtungsring (10) so eingerichtet ist, dass er in einer umfangsseitigen Nut (11) in einem (12) der Rohre angeordnet werden kann, bevor das äußere Rohr (12) aufgeschoben wird, und einen ersten Dichtungsabschnitt (14), der so eingerichtet ist, dass er an dem Boden (16) der Nut (11) anliegt, die in dem einen (12) der Rohre ausgebildet ist, und einen zweiten Dichtungsabschnitt (20) aufweist, der so eingerichtet ist, dass er an dem anderen Rohr (19) anliegt, wobei das Verfahren die Schritte des Extrudierens eines Strangs, des Biegens eines Abschnitts dieses Strangs in eine kreisrunde, ringförmige Form, des Zusammenbringens der Enden dieses Abschnitts und des miteinander Verbindens dieser Enden umfasst, **dadurch gekennzeichnet, dass** der Schritt des Extrudierens eines Strangs das Herstellen eines Strangs in einem Stück durch Koextrusion eines weichen Gummimaterials und eines harten Gummimaterials umfasst, wobei das weiche Gummimaterial einen Dichtungskörper (13) bildet, der die Dichtungsabschnitte (14, 20) des herzustellenden Dichtungsrings (10) umfasst, und das harte Gummimaterial zwei Stützabschnitte (17) bildet, die auf beiden Seiten des ersten Dichtungsabschnitts (14) angeordnet sind und die jeweils im Querschnitt eine axiale Ausdehnung aufweisen, die größer als oder gleich ihrer radialen Ausdehnung ist, wobei sich die axialen und radialen Ausdehnungen auf den herzustellenden Dichtungsring (10) beziehen.

2. Verfahren nach Anspruch 1, wobei die gesamte axiale Ausdehnung der Stützabschnitte (17) und des ersten Dichtungsabschnitts (14) im wesentlichen gleich der Breite der Nut (11) ist.

3. Verfahren nach einem der vorhergehenden Ansprüche, wobei jeder der Stützabschnitte (17) im Querschnitt eine radiale Ausdehnung aufweist, die wenigstens 1/4 der radialen Ausdehnung des Strangs im Querschnitt ist.

4. Verfahren nach einem der vorhergehenden Ansprüche, wobei das weiche Gummimaterial eine Härte von 35-65 IRHD aufweist und das harte Gummimaterial eine Härte von 75-95 IRHD aufweist.

5. Strang, von welchem ein Abschnitt verwendet wird zum Herstellen eines Dichtungsrings (10) zum Abdichten eines ringförmigen Spalts (21) zwischen einer kreisförmigen zylindrischen Außenfläche eines inneren Rohrs (19) und einer kreisförmigen zylindrischen Innenfläche eines äußeren Rohrs (12), das axial auf das innere Rohr geschoben werden kann, wobei der Dichtungsring (10) so eingerichtet ist, dass er in einer umfangsseitigen Nut (11) in einem (12) der Rohre angeordnet werden kann, bevor das äußere Rohr (12) aufgeschoben wird, und einen ersten Dichtungsabschnitt (14), der so eingerichtet ist, dass er an dem Boden (16) der Nut (11) anliegt, die in dem einen (12) der Rohre ausgebildet ist, und einen zweiten Dichtungsabschnitt (20) aufweist, der so eingerichtet ist, dass er an dem anderen Rohr (19) anliegt, **dadurch gekennzeichnet, dass** der Strang in einem Stück durch Koextrusion eines weichen Gummimaterials und eines harten Gummimaterials hergestellt wird, wobei das weiche Gummimaterial einen Dichtungskörper (13) bildet, der die Dichtungsabschnitte (14, 20) des herzustellenden Dichtungsrings (10) umfasst, und das harte Gummimaterial zwei Stützabschnitte (17) bildet, die auf beiden Seiten des ersten Dichtungsabschnitts (14) angeordnet sind und die jeweils im Querschnitt eine axiale Ausdehnung aufweisen, die größer als oder gleich ihrer radialen Ausdehnung ist, wobei sich die axialen und radialen Ausdehnungen auf den herzustellenden Dichtungsring (10) beziehen.

6. Strang nach Anspruch 5, wobei die Stützabschnitte (17), ähnlich wie der erste Dichtungsabschnitt (14), so eingerichtet sind, dass sie an dem Boden (16) der Nut (11) anliegen.

7. Strang nach Anspruch 5 oder 6, wobei jeder der Stützabschnitte (17) im Querschnitt eine radiale Ausdehnung aufweist, die wenigstens 1/4 der radialen Ausdehnung des Strangs im Querschnitt ist.

8. Strang nach einem der Ansprüche 5 bis 7, wobei das weiche Gummimaterial eine Härte von 35-65 IRHD aufweist und das harte Gummimaterial eine Härte von 75-95 IRHD aufweist.

## Revendications

1. Procédé de fabrication d'une bague d'étanchéité (10) pour rendre étanche un espace annulaire (21) entre une surface extérieure cylindrique circulaire d'un tuyau intérieur (19) et une surface intérieure cylindrique circulaire d'un tuyau extérieur (12), qui peut coulisser axialement sur le tuyau intérieur, ladite bague d'étanchéité (10) étant adaptée pour être située dans une rainure circonférentielle (11) dans l'un (12) des tuyaux, avant la mise en place par coulissement du tuyau extérieur (12), et ayant une première partie d'étanchéité (14), qui est adaptée pour buter contre le fond (16) de la rainure (11) formée dans ledit un (12) des tuyaux, et une deuxième partie d'étanchéité (20), qui est adaptée pour buter contre l'autre tuyau (19), le procédé comprenant les étapes consistant à extruder un brin, plier une longueur dudit brin en une forme annulaire circulaire, joindre les extrémités de ladite longueur ensemble, et les interconnecter, **caractérisé en ce que** l'étape d'extrusion d'un brin comprend la réalisation d'un brin en une seule pièce au moyen de la coextrusion d'un matériau de caoutchouc souple et d'un matériau de caoutchouc dur, le matériau de caoutchouc souple formant un corps d'étanchéité (13), qui comprend lesdites parties d'étanchéité (14, 20) de la bague d'étanchéité (10) devant être fabriquée, et le matériau de caoutchouc dur formant deux parties de support (17), qui sont situées de chaque côté de ladite première partie d'étanchéité (14) et qui chacune ont en coupe transversale une extension axiale qui est supérieure ou égale à leur extension radiale, les extensions axiale et radiale renvoyant à la bague d'étanchéité (10) devant être fabriquée.

2. Procédé selon la revendication 1, dans lequel l'extension axiale totale des parties de support (17) et de ladite première partie d'étanchéité (14) est sensiblement égale à la largeur de la rainure (11).

3. Procédé selon l'une quelconque des revendications précédentes, dans lequel chacune des parties de support (17) a en coupe transversale une extension radiale qui fait au moins 1/4 de l'extension radiale du brin en coupe transversale.

4. Procédé selon l'une quelconque des revendications précédentes, dans lequel le matériau de caoutchouc souple a une dureté de 35 à 65 DIDC et le matériau de caoutchouc dur a une dureté de 75 à 95 DIDC.

5. Brin, dont une longueur est utilisée pour fabriquer une bague d'étanchéité (10) pour rendre étanche un espace annulaire (21) entre une surface extérieure cylindrique circulaire d'un tuyau intérieur (19) et une surface intérieure cylindrique circulaire d'un tuyau extérieur (12), qui peut glisser axialement sur le tuyau intérieur, ladite bague d'étanchéité (10) étant adaptée pour être située dans une rainure circonférentielle (11) dans l'un (12) des tuyaux, avant la mise en place par coulissement du tuyau extérieur (12), et ayant une première partie d'étanchéité (14), qui est adaptée pour buter contre le fond (16) de la rainure (11) formée dans ledit un (12) des tuyaux, et une deuxième partie d'étanchéité (20), qui est adaptée pour buter contre l'autre tuyau (19), **caractérisé en ce que** le brin est fabriqué en une seule pièce au moyen de la coextrusion d'un matériau de caoutchouc souple et d'un matériau de caoutchouc dur, le matériau de caoutchouc souple formant un corps d'étanchéité (13), qui comprend lesdites parties d'étanchéité (14, 20) de la bague d'étanchéité (10) devant être fabriquée, et le matériau de caoutchouc dur formant deux parties de support (17), qui sont situées de chaque côté de ladite première partie d'étanchéité (14) et qui ont chacune en coupe transversale une extension axiale qui est supérieure ou égale à leur extension radiale, les extensions axiale et radiale renvoyant à la bague d'étanchéité (10) devant être fabriquée.

6. Brin selon la revendication 5, dans lequel les parties de support (17), comme ladite première partie d'étanchéité (14), sont adaptées pour buter contre le fond (16) de la rainure (11).

7. Brin selon la revendication 5 ou 6, dans lequel chacune des parties de support (17) a en coupe transversale une extension radiale qui fait au moins 1/4 de l'extension radiale du brin en coupe transversale.

8. Brin selon l'une quelconque des revendications 5 à 7, dans lequel le matériau de caoutchouc souple a une dureté de 35 à 65 DIDC et le matériau de caoutchouc dur a une dureté de 75 à 95 DIDC.
